(19) Europäisches Patentamt

European Patent Office

Office européen des brevets

(11) **EP 0 656 841 B1**

(12) **EUROPÄISCHE PATENTSCHRIFT**

(45) Veröffentlichungstag und Bekanntmachung des Hinweises auf die Patenterteilung:
**09.06.1999 Patentblatt 1999/23**

(21) Anmeldenummer: 94917543.4

(22) Anmeldetag: **23.06.1994**

(51) Int. Cl.$^6$: **B60L 3/10**

(86) Internationale Anmeldenummer:
**PCT/CH94/00128**

(87) Internationale Veröffentlichungsnummer:
**WO 95/00355 (05.01.1995 Gazette 1995/02)**

(54) **VERFAHREN UND VORRICHTUNG ZUR SCHLUPFREGELUNG**

PROCESS AND DEVICE FOR SLIP CONTROL

PROCEDE ET DISPOSITIF D'ANTIPATINAGE

(84) Benannte Vertragsstaaten:
**DE ES FR GB IT**

(30) Priorität: **26.06.1993 DE 4321284**

(43) Veröffentlichungstag der Anmeldung:
**14.06.1995 Patentblatt 1995/24**

(73) Patentinhaber: **ABB RESEARCH LTD.**
**8050 Zürich (CH)**

(72) Erfinder:
- **MENTH, Stefan**
  **CH-5415 Nussbaumen (CH)**
- **SUGAYA, Hiro,Dr.**
  **CH-5452 Oberrohrdorf (CH)**

(74) Vertreter: **Weibel, Beat et al**
**Asea Brown Boveri AG**
**Immaterialgüterrecht(TEI)**
**Haselstrasse 16/699 I**
**5401 Baden (CH)**

(56) Entgegenhaltungen:
EP-A- 0 141 157    DE-A- 3 929 497
DE-C- 4 020 350

- **ELEKTRISCHE BAHNEN, Bd.91, Nr.5, Mai 1993, DE Seiten 163 - 178 M. BUSCHER ET AL 'RADSCHLUPFREGELUNG FÜR DREHSTROMLOKOMOTIVEN' in der Anmeldung erwähnt**
- **ABB TECHNIK, Nr.3, 1993 Seiten 13 - 20 'Fuzzy Logic - eine vielversprechende Neuerung in der Automatisierungstechnik' in der Anmeldung erwähnt**
- **PATENT ABSTRACTS OF JAPAN vol. 17, no. 449 (M-1465) 18. August 1993 & JP,A,05 103 402 (TOYO ELECTRIC MFG CO LTD) 23. April 1993**

**Beschreibung**

TECHNISCHES GEBIET

Bei der Erfindung wird ausgegangen von einem Verfahren und einer Vorrichtung zur Schlupfregelung nach dem Oberbegriff der Patentansprüche 1 und 3.

STAND DER TECHNIK

Mit dem Oberbegriff der Patentansprüche 1 und 3 nimmt die Erfindung auf einen Stand der Technik Bezug, wie er durch einen Artikel von M. Buscher u. a.: Radschlupfregelung für Drehstromlokomotiven, in: Elektrische Bahnen, 91 (1993) 5, S. 163 - 178, bekannt ist. Dort wird anhand von Simulationsrechnungen die Funktion der Radschlupfregelung bei unterschiedlichen Antriebskonfigurationen und unterschiedlichen Betriebsbedingungen gezeigt. Die Drehzahlregelung erfolgt in Abhängigkeit von einem Drehzahlsollwert, der durch Integration aus einem Beschleunigungssollwert gewonnen wurde. Dieser Beschleunigungssollwert wird aus einer adaptierten Fahrzeugbeschleunigung und aus einem Beschleunigungshub gebildet, welcher in Abhängigkeit von einer Begrenzer- und Suchlogik sowie von der Istdrehzahl eines Fahrzeugrades gebildet wird. Der größte auftretende Drehmomentsollwert wird in einem Extremwertspeicher abgelegt und stets mit dem aktuellen Wert verglichen.

Das angegebene Suchverfahren ist für Kraftschlußkennlinien ohne ein Maximum nicht anwendbar.

In der DE-C2-4 020 350 ist ein Verfahren und eine Anordnung zur selbstadaptierenden Regelung der Radsatzdrehzahl elektrischer, laufachsloser, mit einer unterlagerten Drehmomentregelung ausgestatteter Triebfahrzeuge auf das Kraftschlußmaximum des Rad-Schiene-Kontaktes angegeben, bei der eine Suchlogik den Schlupf in eine zunächst beliebige Richtung verstellt und prüft, ob sich eine Drehmomenterhöhung oder -erniedrigung einstellt. Bei einer Drehmomenterniedrigung wird die Suchrichtung umgekehrt. Um Kraftschlußverhältnisse zu erfassen, bei denen mit stetig zunehmender Differenzgeschwindigkeit kein Abfall des zu übertragenden Drehmomentes auftritt, ist eine Zusatzstufe vorgesehen, die eine Beschleunigungsreduktion auch dann auslöst, wenn ein Schwellwert am Eingang der Suchlogik vom Drehmomentsollwert-Differenzsignal nicht überschritten worden ist.

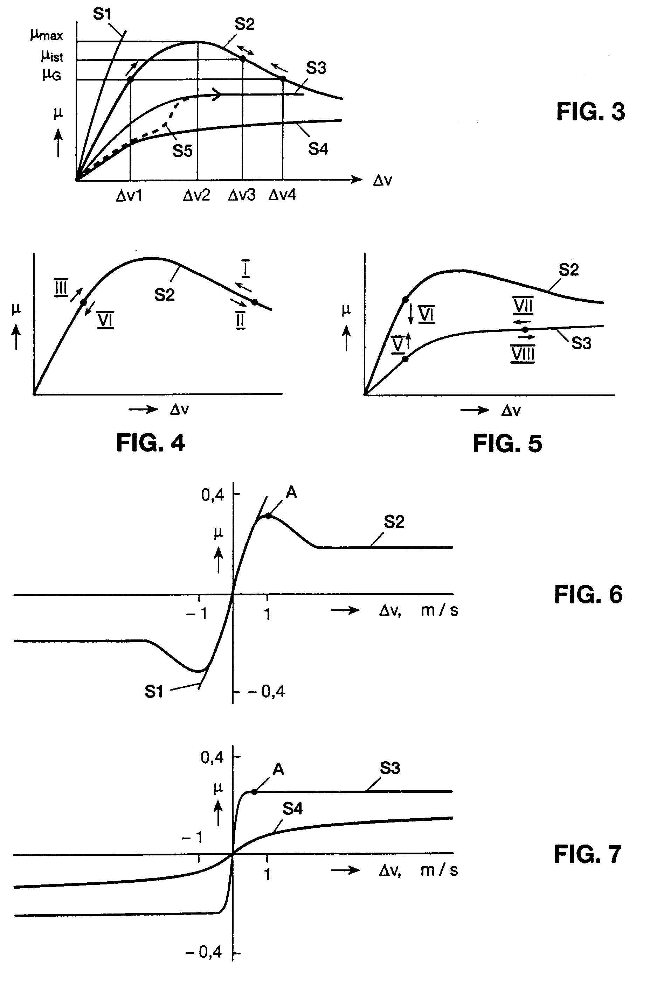

Dieses Verfahren wird anhand einer Kraftschlußkennlinie (S2) in Fig. 3 erläutert. Fig. 3 zeigt 4 Grundformen von Kraftschlußkennlinien (S1 - S4). Auf der Ordinate ist ein Kraftschlußbeiwert bzw. Reibungskoeffizient ($\mu$) aufgetragen und auf der Abszisse die Geschwindigkeitsdifferenz ($\Delta v$).

Bei trockenen Schienen dominieren die Kraftschlußkennlinien (S1) und (S2). Bei der stetig ansteigenden Kraftschlußkennlinie (S1) können wegen der Begrenzung der installierten Zugkraft die höheren Betriebspunkte gar nicht erreicht werden. Die Kraftschlußkennlinie (S2) weist bei einem Geschwindigkeitsdifferenzwert ($\Delta v2$) einen Maximalwert ($\mu_{max}$) des Reibungskoeffizienten ($\mu$) auf. Links von dem Maximalwert ($\mu_{max}$) ist der Betrieb stabil, rechts davon instabil. Die Suchlogik gemäß der DE-C2-4 020 350 arbeitet mit 2 Zuständen, zwischen denen hin und her geschaltet wird. In einem Zustand 1 - Beschleunigungsfreigabe - wird der Schlupf durch Erhöhen der Sollbeschleunigung vergrößert. Falls das durch die Drehzahlregelung eingestellte Drehmoment ansteigt, wird der Drehmomentwert in einem Maximalwertspeicher gespeichert. Wenn das Drehmoment nach Überschreiten des Kraftschlußmaximums wieder abnimmt, bleibt der maximale Wert gespeichert. Sobald das Solldrehmoment, entsprechend einem Istwert ($\mu_{ist}$) des Reibungskoeffizienten ($\mu$) bei einem Geschwindigkeitsdifferenzwert ($\Delta v3$) eine Schwelle bzw. einen Grenzwert ($\mu_G$) des Reibungskoeffizienten ($\mu$) bei einem Geschwindigkeitsdifferenzwert ($\Delta v4$) unterschreitet, wird die Suchrichtung umgekehrt, indem in einen Zustand 2 - Beschleunigungsreduktion - umgeschaltet wird.

In diesem Zustand 2 wird der Schlupf durch Reduzieren der Sollbeschleunigung verkleinert. Wie im Zustand 1 wird auch hier der Verlauf des Solldrehmoments beobachtet und beim Unterschreiten des Grenzwertes ($\mu_G$) bei einem Geschwindigkeitsdifferenzwert ($\Delta v1$) wieder in den Zustand 1 gewechselt. Diese Suchstrategie, bei welcher der Arbeitspunkt immer um das Kraftschlußmaximum pendelt, funktioniert nur, wenn die Kraftschlußkennlinie für größer werdenden Schlupf abnimmt. Bei flachen Kraftschlußkennlinien (S3, S4) nimmt das Drehmoment beim Beschleunigen nicht ab, und der Schwellwert wird nicht Unterschritten. Dadurch nimmt die Differenzgeschwindigkeit stets zu. Um dies zu vermeiden, wird periodisch ein Rücksetzimpuls generiert, so daß die Suchrichtung und somit der Schlupf reduziert wird.

Dieses Verfahren benötigt ferner eine weitere Maßnahme bei stets zunehmenden Kraftschlußkennlinien (S3, S4), um einen zu großen Schlupf zu vermeiden. Es ist wenig flexibel und störanfällig bei Laständerungen. Es erfordert relativ viele Parameter. Achslastschwingungen und andere Störungen können zu unnötigen Umschaltungen der Suchrichtung führen. Die berechnete Zugmasse kann wegdriften, wodurch der Beschleunigungssollwert falsch wird.

Bei nassen und verschmutzten Schienen dominieren die Kraftschlußkennlinien (S3) und (S4), wobei die erst steil und dann flach ansteigende Kraftschlußkennlinie (S3) für nasse und die flach ansteigende Kraftschlußkennlinie (S4) für ölige Verhältnisse typisch ist.

In Wirklichkeit entstehen Verzerrungen durch Änderung des Schienenzustandes oder des Kurvenradius. Wäh-

2

rend der Fahrt kann der Zustand schlagartig ändern, z. B. bei Tunneleinfahrten, Bahnübergängen, einsetzendem Regen usw. Eine gestrichelt eingezeichnete Kraftschlußkennlinie (S5) zeigt den Verlauf des Arbeitspunktes während der Änderung des Schienenzustandes von einer flachen (S4) zu einer hohen Kraftschlußkennlinie (S3) bei gleichzeitiger Erhöhung eines Motor-Drehmoments.

Mit ständig zunehmender Leistung von Traktionsfahrzeugen ist die zuverlässige Ausübung hoher Zugkräfte in allen denkbaren Betriebssituationen von immer größerer Bedeutung. Insbesondere die Einführung von Asynchronmotoren mit Stromrichtertechnik ermöglicht die Erzeugung großer Drehmomente. Während die älteren meist mit Reihenschlußmotoren ausgerüsteten Antriebe mit ihren steilen Drehmoment/Drehzahl-Kennlinien ein vergleichsweise gutmütiges Schleuderverhalten zeigen, ist dies bei den drehmomentgeregelten Drehstromantrieben nicht mehr der Fall. Wegen ihrer horizontalen Charakteristik werden solche Antriebe ohne Eingriff eines drehmomentreduzierenden Reglers nach Einsetzen eines Schleudervorganges bis zur mechanischen Zerstörung hoch beschleunigen. Um dies zu verhindern, ist ein wirksamer und schneller Schleuderschutz erforderlich.

Die wichtigste Einflußgröße auf den Kraftschluß ist die Relativbewegung zwischen Treibrad und Schiene. Zur Beschreibung dieser Relativbewegung dient die Geschwindigkeitsdifferenz (Δv) oder der Schlupf.

Für die Schleudererkennung und die Ausnutzung des maximalen Kraftschlusses benötigt man Meßwerte zur Ermittlung der Geschwindigkeitsdifferenz (Δv) und des Reibungskoeffizienten (μ). Normalerweise stehen 2 Meßgrößen zur Verfügung: das vom Motor abgegebene Drehmoment und die Treibradgeschwindigkeit. Kritisch ist jedoch die Ermittlung der absoluten Zuggeschwindigkeit. Die Zuggeschwindigkeit kann mittels eines Laufrades oder mittels Radar oder durch eine Nachbildung, d. h. mittels einer Pseudolaufachse ermittelt werden. Diese zusätzlichen Maßnahmen sind jedoch unerwünscht.

Bei Triebfahrzeugen ohne Laufachsen ist die genaue Ermittlung der Fahrzeuggeschwindigkeit nur kurzzeitig möglich, vgl. EP-B1-0 141 157. Dort wird die Zugkraft eines Motors in Abständen von 22 s für eine Zeitdauer von 3 s soweit reduziert, daß der Schlupf des zugehörigen Antriebsrades verschwindet und die Radgeschwindigkeit gleich der Fahrzeuggeschwindigkeit wird.

Die Möglichkeit einer Anwendung der Fuzzy-Logik zur Schlupfregelung bei Lokomotivantrieben ist aus der Schweizer Firmenzeitschrift: ABB Technik, 3 (1993), S. 13 - 20, bekannt. Dabei wird die Phasenverschiebung zwischen einem dem Sollmoment aufgeprägten Testsignal und der Winkelgeschwindigkeit der Motorwelle als Stabilitätsmaß für den Antrieb verwendet.

Zum einschlägigen Stand der Technik wird zusätzlich auf die EP-A2-0 297 485 verwiesen, aus der ein Antiblockiersystem für Fahrzeuge bekannt ist, bei dem detektiert wird, ob ein Schlupf-Verhältnis aus der Differenz von Fahrzeug- und Radgeschwindigkeit zu Fahrzeuggeschwindigkeit einen vorgebbaren Grenzwert überschreitet. Dabei wird die Sollgeschwindigkeit der Radgeschwindigkeit des Fahrzeuges mittels Fuzzy-Logik oder Fuzzy-Inferenz in Abhängigkeit von einem berechneten Index für einen Bremsdruckfehler und von einer Bremsverzögerung oder -beschleunigung, welche beiden Größen von einem gemessenen Bremsdruck abgeleitet sind, sowie in Abhängigkeit von der Amplitude der Fahrzeugbeschleunigung gebildet. Dabei ist ein Berechnungsverfahren zur Ermittlung der Istgeschwindigkeit des Fahrzeugs erforderlich.

Zur Bildung der Fuzzy-Funktion, der Zugehörigkeitsfunktion (membership function), der Berechnung des Relevanzgrades und der Schwerpunktbildung wird auf C. C. Lee, Fuzzy Logic in Control Systems: Fuzzy Logic Controller - Part I and II in: IEEE Transactions on Systems, Man and Cybernetics, Vol. 20, No. 2, March/April 1990, S. 404 - 418, 419 - 435, verwiesen.

DARSTELLUNG DER ERFINDUNG

Die Erfindung, wie sie in den Patentansprüchen 1 und 3 definiert ist, löst die Aufgabe, ein Verfahren und eine Vorrichtung zur Schlupfregelung der eingangs genannten Art derart weiterzuentwickeln, daß eine feinfühligere Drehmoment-Anpassung eines Fahrzeugantriebs an wechselnde Adhäsionsverhältnisse von Schienen oder Straßen bzw. Wegen möglich wird.

Ein Vorteil der Erfindung besteht darin, daß auch bei einem Überschreiten des Kraftschlußmaximums ein gutes Regelverhalten gewährleistet ist. Es wird oft am Kraftschlußmaximum gefahren. Das erfindungsgemäße Verfahren ist ohne zusätzliche Maßnahmen auch für flache Kraftschlußkennlinien ohne Maximum anwendbar. Es sind nur wenig Parameter für die Regelung erforderlich. Ein Zugkraft- bzw. Beschleunigungsschwellwert braucht nicht vorgegeben zu werden.

KURZE BESCHREIBUNG DER ZEICHNUNGEN

Die Erfindung wird nachstehend anhand eines Ausführungsbeispiels erläutert. Es zeigen:

Fig. 1            ein Prinzipschaltbild einer Radschlupfregelung mittels Fuzzylogik,

Fig. 2      ein Flußdiagramm zur Berechnung des Kraftschlußmaximums mittels Fuzzylogik,

Fig. 3      typische Kraftschlußkennlinien,

Fig. 4 und 5      unterschiedliche Betriebsfälle anhand von Kraftschlußkennlinien,

Fig. 6 und 7      rechnersimulierte Kraftschlußkennlinien,

Fig. 8 - 10      Eingangs-Zugehörigkeitsfunktionen eines Fuzzyreglers gemäß Fig. 1 und

Fig. 11      Ausgangs-Zugehörigkeitsfunktionen des Fuzzyreglers gemäß Fig. 1.

## WEGE ZUR AUSFÜHRUNG DER ERFINDUNG

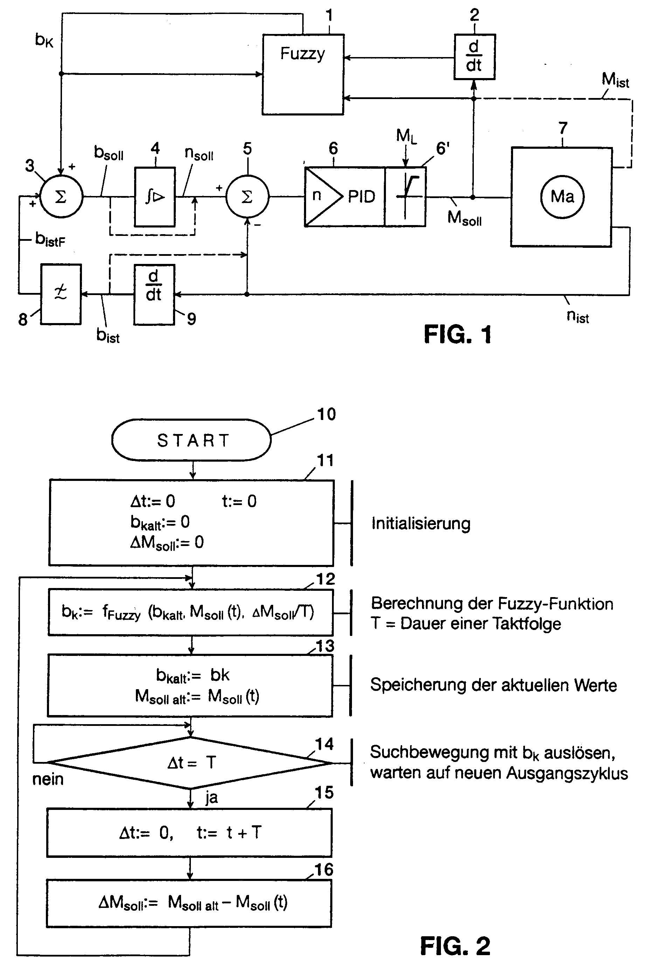

Der Einfachheit wegen sind nachfolgend physikalische Größen und deren Signale gleich bezeichnet. In Fig. 1 ist eine Schlupfregelschaltung für ein Schienenfahrzeug dargestellt, bei der ein als Proportional-Integral-Differentialregler ausgebildeter Drehzahlregler (6) ausgangsseitig einen Drehmoment-Sollwert ($M_{soll}$) an eine Antriebseinrichtung (7) mit Rad-Schiene-Kontakt, z. B. an eine elektrische Maschine (Ma), ferner an einen Fuzzysucher bzw. Fuzzyregler (1) und an ein Differenzierglied (2) liefert, welches ausgangsseitig mit dem Fuzzyregler (1) verbunden ist. Der Drehzahlregler (6) enthält einen Begrenzer (6'), dem von einem nicht dargestellten übergeordneten Geschwindigkeitsregler ein Geschwindigkeitssollwert oder von einem Lokomotivführer ein Solldrehmomentsignal ($M_L$) zugeführt wird, welches den im Drehzahlregler (6) gebildeten Drehmoment-Sollwert ($M_{soll}$) erforderlichenfalls begrenzt. Diese einfache Maßnahme der Drehmoment-Sollwertbegrenzung wirkt sich für die Schlupfregelung mit dem Fuzzyregler (1) so aus, als ob der Rad-Schiene-Kontakt eine horizontale Kraftschlußkennlinie (S3) gemäß Fig. 3 aufweist. Dieser Fall kann ohne zusätzliche Maßnahmen, wie z. B. das periodische Zurücksetzen des Beschleunigungssignals, vom Fuzzyregler (1) gleich behandelt werden.

Die Antriebseinrichtung (7) umfaßt einen nicht dargestellten Drehmomentregler, von dem ein Drehmomentistwertsignal ($M_{ist}$) ableitbar ist, welches anstelle des Drehmoment-Sollwertes ($M_{soll}$) zur Durchführung des Suchverfahrens verwendet werden kann. Die Antriebseinrichtung (7) liefert ausgangsseitig ein Drehzahlistwertsignal ($n_{ist}$) eines Antriebsmotors an einen negierenden Eingang eines 1. Summiergliedes (5) und an ein Differenzierglied (9), dessen einem Beschleunigungsistwert ($b_{ist}$) entsprechendes Ausgangssignal über ein Tiefpaßfilter (8) als gemittelter oder gefilterter Beschleunigungsistwert ($b_{istF}$) einem nichtnegierenden Eingang eines 2. Summiergliedes (3) zugeführt ist. Die Filterung entspricht einer Mittelung über einen Bereich von 3 s - 10 s. Der Fuzzyregler (1) liefert ausgangsseitig einen aktuellen Beschleunigungskorrekturwert ($b_k$) an einen nichtnegierenden Eingang des 2. Summiergliedes (3); gleichzeitig erhält der Fuzzyregler (1) diesen Beschleunigungskorrekturwert ($b_k$) als eine 3. Eingangsgröße. Das 2. Summierglied (3) liefert ausgangsseitig einen Beschleunigungssollwert ($b_{soll}$) über einen integrierenden Verstärker (4) als Drehzahlsollwert ($n_{soll}$) an einen nichtnegierenden Eingang des 1. Summiergliedes (5), das ausgangsseitig mit dem Eingang des Drehzahlreglers (6) verbunden ist. In die Ermittlung einer Sollgeschwindigkeit gehen der Treibraddurchmesser und die Übersetzung des Getriebes mit ein.

Fig. 2 zeigt in einem Flußdiagramm die wichtigsten Berechnungsschritte des Suchens nach dem Kraftschlußmaximum, vgl. z. B. in Fig. 3 den Maximalwert ($\mu_{max}$) bei der Kraftschlußkennlinie (S2), wie sie in dem Fuzzyregler (1) und im Differenzierglied (2) gemäß Fig. 1 realisiert werden.

Nach einem Start, wie er durch einen Startblock (10) angedeutet ist, wird gemäß einem Initialisierungsblock (11) eine Zeitdifferenz ($\Delta t$), eine Zeitvariable bzw. Meßwerterfassungszeit (t), ein alter Beschleunigungskorrekturwert ($b_{kalt}$) und die Änderung eines Drehmoment-Sollwertes ($\Delta M_{soll}$) auf den Wert 0 gesetzt. Anschließend wird gemäß einem Rechenblock (12) der Beschleunigungskorrekturwert ($b_k$) mittels einer Fuzzy-Funktion ($f_{Fuzzy}$) in Abhängigkeit von dem alten Beschleunigungskorrekturwert ($b_{kalt}$), dem aktuellen Drehmoment-Sollwert ($M_{soll}$) und von dessen Zeitlicher Änderung ($\Delta M_{soll}/T$) berechnet.

Danach wird gemäß einem Funktionsblock (13) der aktuelle Beschleunigungskorrekturwert ($b_k$) als alter Beschleunigungskorrekturwert ($b_{kalt}$) gespeichert. Ebenso wird der aktuelle Drehmoment-Sollwert ($M_{soll}$) als alter Drehmoment-Sollwert ($M_{sollalt}$) gespeichert.

Nun wird gemäß einem Entscheidungsblock (14) abgefragt, ob die Zeitdifferenz ($\Delta t$), deren Wert durch einen Taktgeber, z. B. eines Rechners, während des Suchvorganges erhöht wird, gleich einer vorgebbaren Zykluszeitdauer (T) von z. B. 500 ms einer Suchbewegung bzw. eines Auswertzyklus ist. Wenn nein, wird zum Eingang des Entscheidungsblockes (14) zurückgegangen bis der Auswertzyklus abgeschlossen ist, andernfalls wird gemäß einem Funktionsblock (15) die Zeitdifferenz ($\Delta t$) auf 0 gesetzt. Die nächste Meßwerterfassungszeit (t) ergibt sich aus t + T.

Die aktuellen Meßwerte werden also in Intervallen der Zykluszeitdauer (T) erfaßt und während dieser Zykluszeitdauer (T) gespeichert. Während der nachfolgenden Zykluszeitdauer (T) werden diese Meßwerte und der aktuelle Beschleunigungskorrekturwert ($b_k$) als Altwerte gespeichert.

Danach wird gemäß einem Funktionsblock (16) die Änderung des Drehmoment-Sollwertes ($M_{soll}$) aus: ($M_{sollalt}$ -$M_{soll}$(t)) berechnet und zum Eingang des Rechenblockes (12) gesprungen.

Die Drehmomentregelung löst beim Überschreiten des Kraftschlußmaximums innerhalb kürzester Zeit große Schlupfwerte aus. Diese Tatsache erzwingt ein kontrolliertes Vorgehen bei der Beschleunigung und beim Bremsen.

Das erfindungsgemäße Verfahren beruht deshalb auf einer Drehzahlregelung, aufbauend auf der Drehmomentregelung. Um das Kraftschlußmaximum ertasten zu können, ist eine kontinuierliche Suchstrategie erforderlich. Auf Grund der vorhandenen 2 Meßgrößen: Drehmoment-Sollwert ($M_{soll}$) und Drehzahlistwertsignal ($n_{ist}$) des Antriebsmotors (Ma) kann das Schlupfverhalten in den folgenden 8 Fällen I - VIII qualitativ unterschieden werden, wobei die Fälle I - IV in Fig. 4 und die Fälle V - VIII in Fig. 5 angedeutet sind.

Fall I:       Beschleunigung wird reduziert und das eingebrachte Drehmoment nimmt zu.

Fall II:      Beschleunigung wird erhöht und das eingebrachte Drehmoment nimmt ab.

Fall III:     Beschleunigung wird erhöht und das eingebrachte Drehmoment nimmt zu.

Fall IV:      Beschleunigung wird reduziert und das eingebrachte Drehmoment nimmt ab.

Fall V:       Beschleunigung bleibt konstant, aber das eingebrachte Drehmoment nimmt zu. Der Reibungskoeffizient ($\mu$) weist einen besseren Wert auf. Beim nächsten Schritt wird in positiver Richtung gesucht.

Fall VI:      Beschleunigung bleibt konstant, aber das eingebrachte Drehmoment nimmt ab. Der Reibungskoeffizient ($\mu$) weist einen schlechteren Wert auf. Obwohl die Suchrichtung in diesem Fall nicht eindeutig entschieden werden kann, wird die Beschleunigung jedoch erhöht, um die Suchbewegung wieder auszulösen.

Fall VII:     Beschleunigung nimmt ab, aber das eingebrachte Drehmoment bleibt konstant. Der Reibungskoeffizient ($\mu$) weist keinen besseren Wert auf und bleibt unverändert (flache $\mu$-Kurve). Die Beschleunigung muß reduziert werden, um unnötigen Verschleiß zu vermeiden.

Fall VIII:    Beschleunigung nimmt zu, aber das eingebrachte Drehmoment bleibt konstant. Der Reibungskoeffizient ($\mu$) weist keinen besseren Wert auf. Die Beschleunigung muß reduziert werden wie im Fall VII.

Entscheidend ist die Kenntnis, daß unter der Drehzahlregelung die Änderung der Geschwindigkeitsdifferenz ($\Delta v$) durch die Änderung der Sollbeschleunigung angleichend identifiziert werden kann. Nimmt die Beschleunigung zu, so nimmt die Differenzgeschwindigkeit ebenfalls zu, d. h., der Arbeitspunkt bewegt sich nach rechts, andernfalls nach links. Die Drehzahlregelung sorgt mit der Anpassung des Drehmoment-Sollwertes ($M_{soll}$) dafür, daß Soll- und Istdrehzahl ($n_{soll}$, $n_{ist}$) gleich bleiben. Der Beschleunigungssollwert ($b_{soll}$) wird dann aus der gefilterten Radbeschleunigung ($b_{istF}$) und aus dem aktuellen Beschleunigungskorrekturwert ($b_k$) gemäß $b_{soll} = b_{istF} + b_k$ gebildet. Der Beschleunigungskorrekturwert ($b_k$) soll so gewählt werden, daß der Arbeitspunkt in Richtung des Maximalwertes ($\mu_{max}$) bewegt wird.

Das Kraftschlußmaximum kann nun nach folgender Suchstrategie ertastet werden:

-    Suchbewegung auslösen,
-    Verhalten des Drehzahlistwertsignals ($n_{ist}$) indirekt durch den momentanen Beschleunigungskorrekturwert ($b_k$) und den aktuellen Drehmoment-Sollwert ($M_{soll}$) interpretieren,
-    Achsbeschleunigung in richtiger Richtung ändern.

Für jeden erkannten Fall kann eine Beschleunigungskorrektur gemäß folgender Tabelle 1 gebildet werden.

Tabelle 1

| Fall | $b_k$ | $dM_{soll}/dt$ | Beschleunigungskorrektur |
|---|---|---|---|
| Fall I | < 0 | > 0 | groß negativ |
| Fall II | > 0 | < 0 | sehr groß negativ |
| Fall III | > 0 | > 0 | klein positiv |
| Fall IV | < 0 | < 0 | groß positiv |
| Fall V | ≈ 0 | > 0 | klein positiv |
| Fall VI | ≈ 0 | < 0 | klein positiv |
| Fall VII | < 0 | ≈ 0 | klein negativ |
| Fall VIII | > 0 | ≈ 0 | klein/groß negativ |

Die Kraftschlußkennlinien (S1 - S4) für Rad-Schiene, vgl. Fig. 3, ändern sich im Betrieb ständig. Mit der Drehzahlregelung können diese Übergänge auch qualitativ erkannt werden, vgl. Fig. 5.

Im allgemeinen sollte die Beschleunigung bei hohen Werten des Reibungskoeffizienten ($\mu$) geringfügig reduziert und bei tiefen Werten stark erhöht werden. Der entsprechende Betriebszustand kann durch das Ist-Drehmoment grob abgeschätzt werden. Diese letzte Strategie ist eine global gültige Vorsichtsmaßnahme; sie ist in einer Regeltabelle 2 definiert. Auch beim Anfahren, d. h. wenn noch keine Beschleunigung und Drehmomentänderung vorliegt, sollte ein Zug durch diese Strategie voll beschleunigt werden.

Zur Ermittlung der kontinuierlichen Beschleunigungskorrekturgröße ($b_k$) wird die Fuzzy-Inferenzmethode verwendet. Dies ermöglicht es, eine Abbild- bzw. Fuzzy-Funktion ($f_{Fuzzy}$) zu definieren, die in der Regeltabelle 2 mittels linguistischen Variablen, wie etwa "klein positiv", "groß positiv", formuliert werden kann. Die Fuzzyregeltabelle 2 entspricht der Fuzzy-Funktion ($f_{Fuzzy}$); sie dient dazu, eine Entscheidungsstrategie anschaulich darzustellen.

Tabelle 2

| Regel Ri | Eingänge | | | Ausgang $c_i(b_k)$ |
|---|---|---|---|---|
| | $X_i(b_{kalt})$ | $y_i(dM_{soll}/dt)$ | $z_i(M_{soll})$ | |
| R1 | N | N | | PB |
| R2 | Z | N | | PS |
| R3 | P | N | | NB |
| R4 | N | Z | | NS |
| R5 | Z | Z | | PVS |
| R6 | P | Z | | NS |
| R7 | N | P | | NS |
| R8 | Z | P | | PS |
| R9 | P | P | | PS |
| R10 | | | L | PB |
| R11 | | | H | NVS |

Die linguistischen Variablen haben folgende Bedeutung: N = negativ, Z = 0, P = positiv, L = tief, H = hoch, PS = positiv klein, PB = positiv groß, NB = negativ groß, NS = negativ klein, PVS = positiv sehr klein, NVS = negativ sehr klein. i ist eine Laufvariable, welche die Werte 1 - 11 annehmen kann, entsprechend der Regel (Ri). $x_i(b_{kalt})$, $y_i(dM_{soll}/dt)$, $z_i(M_{soll})$ und $c_i(b_k)$ bedeuten Zugehörigkeitsfunktionen der jeweiligen Größen für die Regel (Ri).

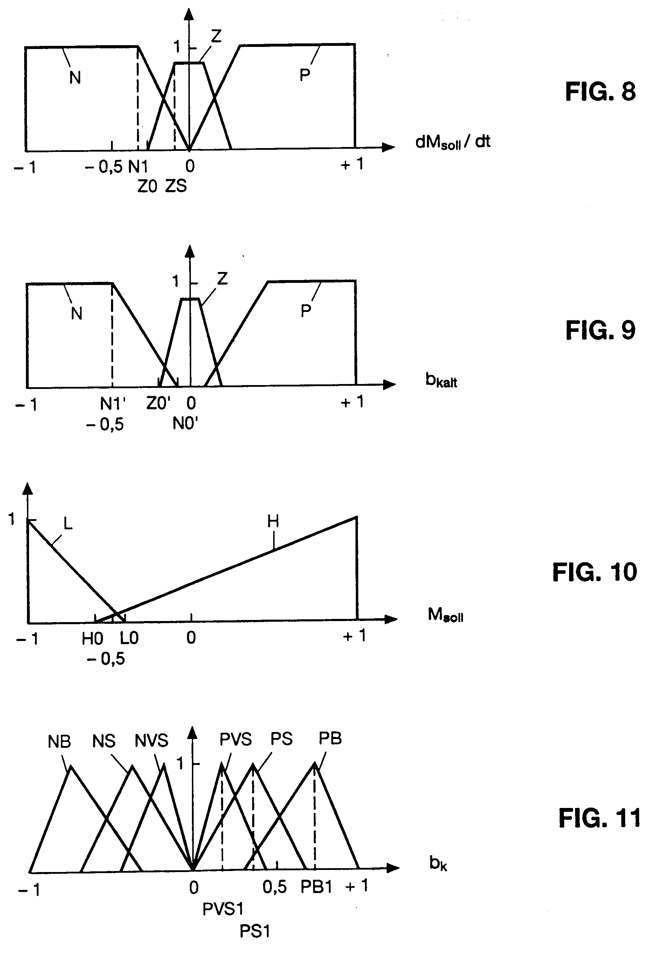

Der zur Bildung der Fuzzy-Funktion ($f_{Fuzzy}$) notwendige Inferenz-Mechanismus besteht aus 3 Schritten: Fuzzifizierung, Inferenz und Defuzzifizierung. Genauere Berechnungsschritte der Inferenz sind in den eingangs genannten Veröffentlichungen von C. C. Lee beschrieben. Zur Defuzzifizierung der 3 Eingangsgrößen werden die zeitabhängigen normierten, d. h. auf Minimal- und Maximalwerte -1 bzw. +1 bezogenen Zugehörigkeitsfunktionen verwendet, wie sie in den Fig. 8 - 11 dargestellt sind.

Fig. 8 zeigt die Zugehörigkeitsfunktionen ($N(dM_{soll}/dt)$), ($Z(dM_{soll}/dt)$) und ($P(dM_{soll}/dt)$), wobei auf der Abszisse die Eingangswerte und auf der Ordinate die Ausgangswerte bzw. Wahrheitswerte dargestellt sind. Die Zugehörigkeitsfunktion (N) hat von $dM_{soll}/dt = -1$ bis $dM_{soll}/dt = N1$ den Wert 1. Von $dM_{soll}/dt = N1$ bis $dM_{soll}/dt = 0$ nimmt die Zugehörigkeitsfunktion (N) linear von 1 auf 0 ab. Der Wert (N1) liegt im Bereich von - 0,2 bis - 0,4. Die Zugehörigkeitsfunktion (P) ist im Wertebereich von $dM_{soll}/dt = 0$ bis 1 bezüglich der 0-Achse spiegelbildlich zur Zugehörigkeitsfunktion (N). Die Zugehörigkeitsfunktion (Z) ist trapezförmig und ebenfalls spiegelbildlich bezüglich der 0-Achse. Sie steigt im negativen Bereich linear von 0 auf einen Sattelwert im Bereich von 0,7 bis 0,9 an, beginnend von einem $dM_{soll}/dt$-Wert (Z0) im Wertebereich von - 0,2 und - 0,4 bis zu einem $dM_{soll}/dt$-Wert (ZS) im Bereich von - 0,1 bis - 0,2.

Fig. 9 zeigt die zeitabhängigen Zugehörigkeitsfunktionen ($N(b_{kalt})$), ($Z(b_{kalt})$) und ($P(b_{kalt})$), die den entsprechenden Zugehörigkeitsfunktionen der Fig. 8 ähnlich sind. Anstelle des Wertes (N1) tritt der Wert (N1') im Bereich von -0,4 bis -0,6. Die Zugehörigkeitsfunktion (N) nimmt schon bei einem Wert (N0') im Bereich von - 0,1 bis - 0,2 den Wert 0 an. Anstelle des Wertes (Z0) tritt der Wert (Z0') im Bereich von - 0,2 bis - 0,4, der kleiner ist als der Wert (N0'). Der Sattelwert der Zugehörigkeitsfunktion (Z) liegt im Bereich von 0,8 bis 0,9; er wird bei dem $b_{kalt}$-Wert N0' erreicht.

Fig. 10 zeigt die zeitabhängigen Zugehörigkeitsfunktionen ($L(M_{soll})$) und ($H(M_{soll})$). Die Zugehörigkeitsfunktion (L) nimmt linear von 1 auf 0 ab, beginnend von einem $M_{soll}$-Wert - 1 bis zu einem $M_{soll}$-Wert (L0) im Bereich von - 0,4 bis - 0,5 Die Zugehörigkeitsfunktion (H) nimmt linear von 0 auf 1 zu, beginnend von einem $M_{soll}$-Wert (H0) im Bereich von - 0,5 bis - 0,7 bis zu einem $M_{soll}$-Wert 1. (H0) ist kleiner als (L0).

Fig. 11 zeigt 6 dreieckförmige Zugehörigkeits- bzw. Ausgangsfunktionen (NB, NS, NVS, PVS, PS, PB) mit Basiswerten von 0 und Maximalwerten von 1, jeweils in Abhängigkeit vom Beschleunigungskorrekturwert ($b_k$). Die Zugehörigkeitsfunktion (PB) hat ihren Maximalwert 1 bei einem $b_k$-Wert (PB1) im Bereich von 0,7 bis 0,9. Die Zugehörigkeitsfunktion (PS) hat ihren Maximalwert 1 bei einem $b_k$-Wert (PS1) im Bereich von 0,3 bis 0,5. Die Zugehörigkeitsfunktion (PVS) hat ihren Maximalwert 1 bei einem $b_k$-Wert (PVS1) im Bereich von 0,1 bis 0,3. Die negativen Zugehörigkeitsfunktionen (NB, NS, NVS) sind spiegelbildlich bezüglich der 0-Achse zu den positiven Zugehörigkeitsfunktionen.

Nun wird ein Relevanzgrad $\alpha_i = x_i(b_{kalt}) \wedge y_i(dM_{soll}/dt) \wedge z_i(M_{soll})$ mit der Bedeutung $\alpha_i = \min(x_i(b_{kalt}), y_i(dM_{soll}/dt), z_i(M_{soll}))$ gebildet, wobei i die Laufvariable für die Regeln 1 - 11 gemäß Tabelle 2 ist und diese logische Beziehung nur für diejenigen Größen gebildet wird, welche in Tabelle 2 vorhanden sind.

Der Relevanzgrad ($\alpha_1$) für Regel (R1) lautet: für $b_{kalt}$ = N und $dM_{soll}/dt$ = N ist $b_k$ = PB . Regel R10 ist dominant. Falls $M_{soll}$ = L ist, dann ist $b_k$ = PB .

Aus diesem Relevanzgrad ($\alpha_i$) und der Zugehörigkeitsfunktion ($c_i$) der Ausgangsgröße ($b_k$) wird die Regelentscheidung

$$\beta_{ci}(w) = \alpha_i \wedge c_i(w) \text{ mit der Bedeutung}$$

$$\beta_{ci}(w) = \min(\alpha_i, c_i(w))$$

(Minimum-Operation nach Mamdani) oder

$$\beta_{ci}(w) = \alpha_i \cdot c_i(w)$$

(Skalarprodukt-Operation nach Larsen) berechnet, wobei (w) eine Laufvariable von ($b_k$) ist. Die gesamte Schlußfolgerung ist gegeben durch $\beta_c(w) = \Sigma \beta_{ci}$, wobei über i von 1 bis m, m = Anzahl der Regeln gemäß Tabelle 2, summiert wird.

Der aktuelle Beschleunigungskorrekturwert ($b_k$), d. h. der berechnete Wert der Fuzzy-Funktion ($f_{Fuzzy}$), kann als Mittelwert von m = 11 $b_k$-Werten ($w_i$) gemäß:

$$b_k = (\Sigma w_i)/m \text{ für } i = 1 \text{ bis } m$$

berechnet werden, wobei ($w_i$) derjenige Wert von ($b_k$) ist, bei welchem die Größe ($\beta_{ci}(wi)$) ihren Maximalwert hat.

Der aktuelle Beschleunigungskorrekturwert ($b_k$) kann auch als "Gravitationszentrum" gemäß:

$$b_k = (\Sigma \beta_{ci}(w_i) \cdot w_i)/\Sigma \beta_{ci}(w_i)$$

berechnet werden, wobei jeweils über i von 1 bis m summiert wird.

Die Fig. 6 und 7 zeigen simulierte Kraftschlußkennlinien (S1 - S4). Während der Simulation kann schlagartig zwischen den verschiedenen Kraftschlußkennlinien (S1 - S4) umgeschaltet werden. (A) bezeichnet den jeweiligen Arbeitspunkt bei den Kraftschlußkennlinien (S2, S3).

Die Fuzzy-Inferenzmethode ist eine Möglichkeit, die genannte Suchstrategie in einer Fuzzy-Funktion ($f_{Fuzzy}$) abzubilden. Eine solche Funktion kann aber auch mittels anderer Methoden annähernd realisiert werden, wie z. B. mittels eines neuronalen Netzwerkes oder einer polynomen Funktion, deren Schlußfolgerung durch eine Funktion mit den gleichen Eingangsgrößen definiert wird.

Anstelle einer Drehzahlregelung kann eine Beschleunigungsregelung verwendet werden. Dabei kann das Integrierglied (4) entfallen. Anstelle des Drehzahlistwertsignals ($n_{ist}$) wird dann dem Summierglied (5) der Beschleunigungsistwert ($b_{ist}$) zugeführt. Dabei wird der Drehzahlregler (6) als Beschleunigungsregler verwendet.

Das Summierglied (5) kann selbstverständlich in den Drehzahlregler (6) integriert sein.

Anstelle von 3 Zugehörigkeitsfunktionen (H, L, N ...) pro Eingangsgröße gemäß Tabelle 2 können mehr als 3, z. B. 7 Zugehörigkeitsfunktionen abgebildet werden, wie es in der eingangs genannten Veröffentlichung von C. C. Lee beschrieben ist. Anstelle des Drehmoment-Sollwertes ($M_{soll}$) kann der Drehmoment-Istwert ($M_{ist}$) zur Berechnung der Fuzzy-Funktion ($F_{uzzy}$) verwendet werden.

BEZEICHNUNGSLISTE

| | |
|---|---|
| 1 | Fuzzyregler, Suchlogik |
| 2, 9 | Differenzierglieder |
| 3, 5 | Summierglieder |
| 4 | Integrierglied, integrierender Verstärker |
| 6 | Drehzahlregler |
| 6' | Begrenzer |
| 7 | Antriebseinrichtung mit Rad-Schiene-Kontakt |
| 8 | Tiefpaßfilter |
| 10 | Startblock |
| 11 | Initialisierungsblock |
| 12 | Rechenblock für die Fuzzy-Funktion |
| 13 | Entscheidungsblock |
| 14, 15, 16 | Funktionsblöcke |
| I ... VIII | Schlupffälle |
| A | Arbeitspunkte |
| $b_k$ | aktueller Beschleunigungskorrekturwert |
| $b_{kalt}$ | alter Beschleunigungskorrekturwert |
| $b_{ist}$ | Beschleunigungsistwert |
| $b_{istF}$ | gefilterter Beschleunigungsistwert |
| $b_{soll}$ | Beschleunigungssollwert |
| $c_i$ | i. Zugehörigkeitsfunktion von $b_k$ der Regel Ri |
| $f_{Fuzzy}$ | Fuzzy-Funktion |
| H, L, N, NB, NS, NVS, P, PB, PS, PVS, Z | Zugehörigkeitsfunktionen |
| H | hoch, ansteigender Funktionsteil von $M_{soll}$ |
| H0 | Nullstelle von H |
| L | tief, fallender Funktionsteil von $M_{soll}$ |
| L0 | Nullstelle von L |
| m | Anzahl Regeln Ri |
| Ma | Maschine |
| $M_L$ | Solldrehmomentsignal eines Geschwindigkeitsreglers/Lokomotivführers |
| $M_{soll}$ | aktueller Drehmoment-Sollwert für eine Motorregelung |
| $M_{sollalt}$ | alter Drehmoment-Sollwert |
| n | Drehzahl |
| $n_{ist}$ | Drehzahlistwertsignal eines Antriebsrades |
| NB | negativ groß |
| $n_{soll}$ | Drehzahlsollwert |
| NS | negativ klein |
| NVS | negativ sehr klein |
| N0' | Nullstelle von N |
| N1, N1' | Abstiegsbeginn von N |
| PB | positiv groß |
| PS | positiv klein |
| PVS | positiv sehr klein |
| PVS1, PS1, PB1 | Maximalwerte von PVS, PS, PB |
| Ri | i. Fuzzyregel |
| S1 ... S4 | Kraftschlußkennlinien |
| S5 | Übergangskurve |
| t | Zeit, Zeitvariable |
| $\Delta t$ | Zeitdifferenz |
| T | Zykluszeitdauer |
| $\Delta v$ | Geschwindigkeitsdifferenz |
| $\Delta v1 ... \Delta v4$ | Geschwindigkeitsdifferenzwerte |
| w | Laufvariable von $b_k$ |
| $w_i$ | $b_k$-Wert an der Stelle des Maximums von $\beta_{ci}$ |

$x_i$         i. Zugehörigkeitsfunktion von $b_{kalt}$ der Regel Ri

$y_i$         i. Zugehörigkeitsfunktion von $dM_{soll}/dt$ der Regel Ri

$z_i$         i. Zugehörigkeitsfunktion von $M_{soll}$ der Regel Ri

ZS       Sattelbeginn von Z

Z0, Z0'     Anstiegsbeginn von Z

$\beta_{ci}$        Schlußfolgerung aus der i. Regel von $R_i$

$\mu$         Kraftschlußbeiwert, Reibungskoeffizient

$\mu_G$       Grenzwert von $\mu$

$\mu_{max}$     Maximalwert von $\mu$

$\mu_{is}$       Istwert von $\mu$

**Patentansprüche**

**1.** Verfahren zur Schlupfregelung bei einem Fahrzeug

a) mit mindestens einer Antriebseinrichtung (7), die mindestens ein Antriebsrad aufweist, von dem ein Drehzanlistwertsignal ($n_{ist}$) oder ein dem Drehzahlistwertsignal ($n_{ist}$) proportionales Signal detektiert wird,

b) wobei die Antriebseinrichtung (7) in Abhängigkeit von einem geregelten Drehmoment-Sollwert ($M_{soll}$) gesteuert wird,

c) wobei ein Fahrzeug-Beschleunigungssollwert ($b_{soll}$) in Abhängigkeit von einem Suchverfahren für ein Kraftschlußmaximum gebildet wird,

d) welches Suchverfahren in Abhängigkeit von dem Drehmoment-Sollwert ($M_{soll}$) oder von einem Drehmoment-Istwert ($M_{ist}$) durchgeführt wird,

e) wobei der Fahrzeug-Beschleunigungssollwert ($b_{soll}$) in Abhängigkeit von einem Fahrzeug-Beschleunigungsistwert ($b_{istF}$) und von einem diesem hinzugefügten Beschleunigungskorrekturwert ($b_k$) gebildet wird,

dadurch gekennzeichnet,

f) daß das Suchverfahren in Abhängigkeit von einem zeitlich früheren Beschleunigungskorrekturwert ($b_{kalt}$) durchgeführt wird, welcher gleich dem aktuellen Beschleunigungskorrekturwert ($b_k$) der vorangegangenen Meßwerterfassung ist, und

g) daß der Beschleunigungskorrekturwert ($b_k$) in dem Suchverfahren als Schwerpunkt einer Fuzzy-Regelentscheidung

$$\beta_{ci}(w) = \min(\alpha_i, c_i(w)) \text{ oder}$$

$$\beta_{ci}(w) = \alpha_i \cdot c_i(w)$$

berechnet wird, mit

$$\alpha_i = \min(x_i(b_{kalt}), y_i(dM_{soll}/dt), z_i(M_{soll})),$$

wobei nur in der jeweiligen Regel (Ri) vorhandene Zugehörigkeitsfunktionen berücksichtigt werden, w = Laufvariable von bk, $dM_{soll}/dt$ = zeitliche Ableitung des Drehmoment-Sollwertes $M_{soll}$, $x_i$ = i. Zugehörigkeitsfunktion von $b_{kalt}$ einer i. Fuzzyregel Ri, $y_i$ = i. Zugehörigkeitsfunktion von $dM_{soll}/dt$ der i. Fuzzyregel Ri, $z_i$ = i. Zugehörigkeitsfunktion von $M_{soll}$ der i. Fuzzyregel Ri, $c_i$ = i. Zugehörigkeitsfunktion von $b_k$ der i. Fuzzyregel Ri, i = Laufvariable mit $1 \leq i \leq 11$, wobei die Zugehörigkeitsfunktionen der 11 Fuzzyregeln Ri folgende linguistische Variable mit der Bedeutung: N = negativ, Z = 0, P = positiv, L = tief, H = hoch, PS = positiv klein, PB = positiv groß, NB = negativ groß, NS = negativ klein, PVS = positiv sehr klein, NVS = negativ sehr klein aufweisen:

| Regel Ri | Eingänge | | | Ausgang $c_i(b_k)$ |
|---|---|---|---|---|
| | $x_i(b_{kalt})$ | $y_i(dM_{soll}/dt)$ | $z_i(M_{soll})$ | |
| R1 | N | N | | PB |
| R2 | Z | N | | PS |

(fortgesetzt)

| Regel Ri | Eingänge | | | Ausgang $c_i(b_k)$ |
|---|---|---|---|---|
| | $x_i(b_{kalt})$ | $y_i(dM_{soll}/dt)$ | $z_i(M_{soll})$ | |
| R3 | P | N | | NB |
| R4 | N | Z | | NS |
| R5 | Z | Z | | PVS |
| R6 | P | Z | | NS |
| R7 | N | P | | NS |
| R8 | Z | P | | PS |
| R9 | P | P | | PS |
| R10 | | | L | PB |
| R11 | | | H | NVS. |

2.  Verfahren nach Anspruch 1, dadurch gekennzeichnet,

a) daß die Eingangsgröße $dM_{soll}/dt$ eine negative Zugehörigkeitsfunktion N aufweist, die im Bereich von

-   1 bis zu einem vorgebbaren Wert N1 mit
-   $0,4 \le N1 \le -0,2$ den Wert 1 hat und anschließend bis zu einem $dM_{soll}/dt$-Wert 0 auf den Wert 0 abnimmt,

b) daß dieselbe Eingangsgröße ferner im Bereich um 0 eine trapezförmige Zugehörigkeitsfunktion Z aufweist, die bezüglich des $dM_{soll}/dt$-Wertes 0 spiegelbildlich ist und von einem vorgebbaren Wert Z0 mit

-   $0,4 \le Z0 \le -0,2$ bis zu einem vorgebbaren Sattelbeginn ZS mit $-0,2 \le ZS \le -0,1$ von 0 auf einen Sattelwert im Bereich von 0,7 - 0,9 ansteigt und

c) daß dieselbe Eingangsgröße ferner im positiven Bereich eine Zugehörigkeitsfunktion P aufweist, welche bezüglich des $dM_{soll}/dt$-Wertes 0 spiegelbildlich zu der Zugehörigkeitsfunktion N ist,
d) daß die Eingangsgröße $b_{kalt}$ eine negative Zugehörigkeitsfunktion N aufweist, die im Bereich von

-   1 bis zu einem vorgebbaren Wert N1' mit
-   $0,6 \le N1' \le -0,4$ den Wert 1 hat und anschließend bis zu einem $b_{kalt}$-Wert N0' mit $-0,2 \le N0' \le -0,1$ auf den Wert 0 abnimmt,

e) daß dieselbe Eingangsgröße ferner im Bereich um 0 eine trapezförmige Zugehörigkeitsfunktion Z aufweist, die bezüglich des $b_{kalt}$-Wertes 0 spiegelbildlich ist und von einem vorgebbaren Wert Z0' mit $-0,4 \le Z0' \le -0,2$ bis zu einem vorgebbaren Sattelbeginn (N0') von einem Wert 0 auf einen Sattelwert im Bereich von 0,8 - 0,9 ansteigt und
f) daß dieselbe Eingangsgröße ferner im positiven Bereich eine Zugehörigkeitsfunktion P aufweist, welche bezüglich des $b_{kalt}$-Wertes 0 spiegelbildlich zu der Zugehörigkeitsfunktion N ist,
g) daß die Eingangsgröße $M_{soll}$ eine negative Zugehörigkeitsfunktion L aufweist, die im Bereich von

-   1 bis zu einem vorgebbaren Wert L0 mit
-   $0,5 \le L0 \le 0,4$ von einem Wert 1 auf den Wert 0 abnimmt,

h) daß dieselbe Eingangsgröße ferner eine Zugehörigkeitsfunktion H aufweist, die von einem vorgebbaren Wert H0 mit $-0,7 \le H0 \le -0,5$ bis zu einem Endwert 1 von einem Wert 0 auf einen Endwert 1 ansteigt und
i) daß die Ausgangsgröße $b_k$ im negativen Bereich 3 dreieckförmige Zugehörigkeitsfunktionen NB, NS, NVS aufweist die bezüglich eines $b_k$-Wertes 0 spiegelbildlich zu positiven Zugehörigkeitsfunktionen PB, PS, PVS sind,
j) daß die Zugehörigkeitsfunktion (PB) ihren Maximalwert 1 bei einem $b_k$-Wert (PB1) im Bereich von 0,7 bis 0,9 hat,
k) daß die Zugehörigkeitsfunktion (PS) ihren Maximalwert 1 bei einem $b_k$-Wert (PS1) im Bereich von 0,3 bis 0,5 hat und

l) daß die Zugehörigkeitsfunktion (PVS) ihren Maximalwert 1 bei einem $b_k$-Wert (PVS1) im Bereich von 0,1 bis 0,3 hat, wobei alle Werte auf normierte Größen bezogen sind.

3. Vorrichtung zur Schlupfregelung bei einem Fahrzeug

a) mit mindestens einer Antriebseinrichtung (7), die mindestens 1 Antriebsrad aufweist, von dem ein Drehzahl-istwertsignal ($n_{ist}$) oder ein dem Drehzahlistwertsignal ($n_{ist}$) proportionales Signal abgreifbar ist,

b) mit einem Beschleunigungs- oder Drehzahlregler (6), der ausgangsseitig mit der Antriebseinrichtung (7) in Wirkverbindung steht und diese in Abhängigkeit von einem geregelten Drehmoment-Sollwert ($M_{soll}$) steuert,

c) mit einem 1. Summierglied (5), das ausgangsseitig mit dem Beschleunigungs- oder Drehzahlregler (6) in Wirkverbindung steht und an dessen nichtnegierenden Eingang ein Fahrzeug-Beschleunigungssollwertsignal ($b_{soll}$) oder ein Drehzahlsollwertsignal ($n_{soll}$) anliegt,

d) wobei einem negierenden Eingang des 1. Summiergliedes (5) ein Beschleunigungsistwertsignal ($b_{ist}$) oder das Drehzahlistwertsignal ($n_{ist}$) zugeführt ist,

e) mit einer Suchlogik (1) für ein Kraftschlußmaximum, welche eingangsseitig mit dem Ausgang des Beschleunigungs- oder Drehzahlreglers (6) oder mit einem Ausgang für das Drehmoment-Istwertsignal ($M_{ist}$) der Antriebseinrichtung (7) in Wirkverbindung steht,

f) wobei ein 2. Summierglied (3) vorgesehen ist mit einem 1. nichtnegierenden Eingang, der mit dem Ausgang der Suchlogik (1) in Wirkverbindung steht, und mit einem 2. nichtnegierenden Eingang, der mit einem Ausgang der Antriebseinrichtung (7) für das Drehzahlistwertsignal ($n_{ist}$) in Wirkverbindung steht,

g) wobei das 2. Summierglied (3) ausgangsseitig mit einem nichtnegierenden Eingang des 1. Summiergliedes (5) in Wirkverbindung steht,

dadurch gekennzeichnet,

h) daß die Suchlogik ein Fuzzyregler (1) ist, der in Abhängigkeit von einem Drehmoment-Sollwert ($M_{soll}$), von dessen zeitlicher Ableitung und von einem früheren Beschleunigungskorrekturwert ($b_{kalt}$) ausgangsseitig einen aktuellen Beschleunigungskorrekturwert ($b_k$) an das 2. Summierglied (3) liefert, und

i) daß die Antriebseinrichtung (7) mit ihrem Ausgang für ein Drehzahlistwertsignal ($n_{ist}$) über ein Differenzier-glied (9) und ein nachgeschaltetes Tiefpaßfilter (8) mit dem 2. Summierglied (3) in Wirkverbindung steht.

## Claims

1. Method for slip control in a vehicle

a) having at least one drive device (7) which has at least one driving wheel from which an actual rpm value signal ($n_{act}$) or a signal which is proportional to the actual rpm value signal ($n_{act}$) is detected,

b) the drive device (7) being controlled as a function of a controlled desired torque value ($M_{des}$),

c) a vehicle desired acceleration value ($b_{des}$) being formed as a function of a search method for a maximum adhesion point,

d) which search method is carried out as a function of the desired torque value ($M_{des}$) or of an actual torque value ($M_{act}$),

e) the vehicle desired acceleration value ($b_{des}$) being formed as a function of a vehicle actual acceleration value ($b_{actF}$) and of an acceleration correction value ($b_k$) which is added thereto,

characterized in that

f) the search method is carried out as a function of an earlier acceleration correction value ($b_{kold}$) which is equal to the current acceleration correction value ($b_k$) of the preceding measured value detection, and

g) in that the acceleration correction value ($b_k$) is calculated in the search method as a centre of gravity of a fuzzy rule decision

$$\beta_{ci}(w) = \min(\alpha_i, c_i(w)) \text{ or}$$

$$\beta_{ci}(w) = \alpha_i \cdot c_i(w)$$

where

$$\alpha_i = \min(x_i(b_{kold}), y_i(dM_{des}/dt), z_i(M_{des})),$$

only membership functions which are present in the respective rule (Ri) being taken into account, w = running

variable of $b_k$, $dM_{des}/dt$ = time derivative of the desired torque value $M_{des}$, $x_i$ = ith membership function of $b_{kold}$ of an ith fuzzy rule Ri, $y_i$ = ith membership function of $dM_{des}/dt$ of the ith fuzzy rule Ri, $z_i$ = ith membership function of $M_{des}$ of the ith fuzzy rule Ri, $c_i$ = ith membership function of $b_k$ of the ith fuzzy rule Ri, i = running variable with $1 \leq i \leq 11$, the membership functions of the 11 fuzzy rules Ri having the following linguistic variable with the meaning: N = negative, Z = 0, P = positive, L = low, H = high, PS = positive small, PB = positive big, NB = negative big, NS = negative small, PVS = positive very small, NVS = negative very small:

| Rule Ri | Inputs | | | Output $c_i(b_k)$ |
|---------|--------|--------|--------|-------------------|
|  | $x_i(b_{kold})$ | $y_i(dM_{des}/dt)$ | $z_i(M_{des})$ |  |
| R1 | N | N |  | PB |
| R2 | Z | N |  | PS |
| R3 | P | N |  | NB |
| R4 | N | Z |  | NS |
| R5 | Z | Z |  | PVS |
| R6 | P | Z |  | NS |
| R7 | N | P |  | NS |
| R8 | Z | P |  | PS |
| R9 | P | P |  | PS |
| R10 |  |  | L | PB |
| R11 |  |  | H | NVS. |

2. Method according to Claim 6, characterized in that

a) the input variable $dM_{des}/dt$ has a negative membership function N which has the value 1 in the range from -1 to a prescribable value N1 where $-0.4 \leq N1 \leq -0.2$ and subsequently decreases to the value 0 up to a $dM_{des}/dt$ value 0,

b) the same input variable also has a trapezoidal membership function Z in the region about 0, which is mirror-inverted with respect to the $dM_{des}/dt$ value 0 and rises from a prescribable value ZO where $-0.4 \leq ZO \leq -0.2$ up to a prescribable start of saddle ZS where $-0.2 \leq ZS \leq -0.1$ from 0 to a saddle value in the range from 0.7 - 0.9 and

c) the same input variable also has a membership function P in the positive range, which is mirror-inverted around the $dM_{des}/dt$ value 0 with respect to the membership function N,

d) the input variable $b_{kold}$ has a negative membership function N which has the value 1 in the range from -1 to a prescribable value N1' where $-0.6 \leq N1' \leq -0.4$ and subsequently decreases to the value 0 up to a $b_{kold}$ value NO' with $-0.2 \leq NO' \leq -0.1$,

e) the same input variable also has a trapezoidal membership function Z in the region around 0, which membership function Z is mirror-inverted around the $b_{kold}$ value 0 and rises from a value 0 to a saddle value in the range from 0.8 - 0.9 from a prescribable value ZO' where $-0.4 \leq ZO' \leq -0.2$ up to a prescribable start of saddle (NO') and

f) this input variable also has a membership function P in the positive range, which membership function P is mirror-inverted around the $b_{kold}$ value 0 with respect to the membership function N,

g) the input variable $M_{des}$ has a negative membership function L which decreases from a value 1 to the value 0 in the range from -1 up to a prescribable value L0 where $-0.5 \leq LO \leq -0.4$,

h) the same input variable also has a membership function H which rises from a value 0 to a final value 1 from a prescribable value HO where $-0.7 \leq HO \leq -0.5$ up to a final value 1 and

i) the output variable $b_k$ has, in the negative range 3, triangular membership functions NB, NS, NVS which are mirror-inverted around a $b_k$ value 0 with respect to positive membership functions PB, PS, PVS,

j) the membership function (PB) has its maximum value 1 at a $b_k$ value (PB1) in the range from 0.7 to 0.9,

k) the membership function (PS) has its maximum value 1 at a $b_k$ value (PS1) in the range from 0.3 to 0.5 and

l) the membership function (PVS) has its maximum value 1 at a $b_k$ value (PVS1) in the range from 0.1 to 0.3, all the values being related to standardized variables.
Device for slip control in a vehicle

a) having at least one drive device (7) which has at least 1 driving wheel from which an actual rpm value signal ($n_{act}$) or a signal which is proportional to the actual rpm value signal ($n_{act}$) can be tapped,

b) having an acceleration or rpm controller (6) which is operatively connected on the output side to the drive device (7) and controls the latter as a function of a controlled desired torque value ($M_{des}$),

c) having a first summing element (5) which is operatively connected on the output side to the acceleration or rpm controller (6) and at whose nonnegating input a vehicle desired acceleration value signal ($b_{des}$) or a desired rpm value signal ($n_{des}$) is present,

d) an actual acceleration value signal ($b_{act}$) or the actual rpm value signal ($n_{act}$) being fed to a negating input of the first summing element (5),

e) having a search logic (1) for a maximum adhesion point which is operatively connected on the input side to the output of the acceleration or rpm controller (6) or to an output for the actual torque value signal ($M_{act}$) of the drive device (7),

f) a second summing element (3) being provided with a first nonnegating input which is operatively connected to the output of the search logic (1), and with a second nonnegating input which is operatively connected to an output of the drive device (7) for the actual rpm value signal ($n_{act}$),

g) the second summing element (3) being operatively connected on the output side to a nonnegating input of the first summing element (5),

characterized in that

h) the search logic is a fuzzy controller (1) which supplies on the output side an instantaneous acceleration correction value ($b_k$) to the second summing element (3) as a function of a desired torque value ($M_{des}$), of its time derivative and of an earlier acceleration correction value ($b_{kold}$), and

i) in that the drive device (7) is operatively connected by its output for an actual rpm value signal ($n_{act}$) to the second summing element (3) via a differentiating element (9) and a downstream low pass filter (8).


## Revendications

1.    Procédé de contrôle du patinage dans un véhicule

a) avec au moins un dispositif d'entraînement (7), qui présente au moins une roue motrice, dont on détecte un signal de la valeur réelle de la vitesse de rotation ($n_{ist}$) ou un signal proportionnel au signal de la valeur réelle de la vitesse de rotation ($n_{ist}$),

b) dans lequel le dispositif d'entraînement (7) est commandé en fonction d'une valeur de consigne régulée du couple moteur ($M_{soll}$),

c) dans lequel on forme une valeur de consigne de l'accélération du véhicule ($b_{soll}$) en fonction d'un processus de recherche d'un maximum de transmission d'effort,

d) processus de recherche qui est exécuté en fonction de la valeur de consigne du couple moteur ($M_{soll}$) ou d'une valeur réelle du couple moteur ($M_{ist}$),

e) dans lequel on forme la valeur de consigne de l'accélération du véhicule ($b_{soll}$) en fonction d'une valeur réelle de l'accélération du véhicule ($b_{istF}$) et d'une valeur de correction de l'accélération ($b_k$) ajoutée à celle-ci, caractérisé en ce que

f) on exécute le processus de recherche en fonction d'une valeur temporellement antérieure de correction de l'accélération ($b_{kalt}$), qui est égale à la valeur actuelle de correction de l'accélération ($b_k$) de la prise de mesure précédente, et en ce que

g) on calcule la valeur de correction de l'accélération ($b_k$) dans le processus de recherche comme centre de gravité d'une décision de règle floue

$$\beta_{ci}(w) = \min [\alpha_i, c_i(w)] \text{ ou}$$

$$\beta_{ci}(w) = \alpha_i \cdot c_i(w), \text{ avec}$$

$$\alpha_i = \min [x_i(b_{kalt}), y_i(dM_{soll}/dt), Z_i(M_{soll})],$$

où on ne prend en considération que des fonctions d'appartenance présentes dans la règle respective (Ri), w = variable courante de $b_k$, $dM_{soll}/dt$ = dérivée temporelle de la valeur de consigne du couple moteur $M_{soll}$, $x_i$ = $i^{ème}$ fonction d'appartenance de $b_{kalt}$ à une $i^{ème}$ règle floue Ri, $y_i$ = $i^{ème}$ fonction d' appartenance de $dM_{soll}/dt$

a la $i^{ème}$ règle floue $R_i$, $z_i$ = $i^{ème}$ fonction d'appartenance de $M_{soll}$ a la $i^{ème}$ règle floue $R_i$, $ci$ = variable courante avec $1 \leq i \leq 11$, où les fonctions d'appartenance des 11 règles floues $R_i$ présentent les variables linguistiques suivantes avec la signification: N = négative, Z = 0, P = positive, L = basse, H = haute, PS = positive petite, PB = positive grande, NB = négative grande, NS = négative petite, PVS = positive très petite, NVS = négative très petite:

| Règle $R_i$ | Entrées | | | Sortie $c_i(b_k)$ |
|---|---|---|---|---|
| | $x_i(b_{kalt})$ | $y_i(dM_{soll}/dt)$ | $z_i(M_{soll})$ | |
| R1 | N | N | | PB |
| R2 | Z | N | | PS |
| R3 | P | N | | NB |
| R4 | N | Z | | NS |
| R5 | Z | Z | | PVS |
| R6 | P | Z | | NS |
| R7 | N | P | | NS |
| R8 | Z | P | | PS |
| R9 | P | P | | PS |
| R10 | | | L | PB |
| R11 | | | H | NVS |

2. Procédé suivant la revendication 1, caractérisé en ce que

a) la grandeur d'entrée $dM_{soll}/dt$ présente une fonction d'appartenance N négative, qui a la valeur 1 dans le domaine de -1 jusqu'à une valeur prévisible de N1 avec $-0,4 \leq N1 \leq -0,2$ et décroit ensuite à la valeur 0 jusqu'à une valeur 0 de $dM_{soll}/dt$, en ce que

b) la même grandeur d'entrée présence en outre, dans le domaine autour de 0, une fonction d'appartenance trapézoïdale Z, qui est symétrique par rapport à la valeur 0 de $dM_{soll}/dt$ et qui croît d'une valeur prévisible Z0 avec $-0,4 \leq Z0 \leq -0,2$ jusqu'à un début de plateau prévisible ZS avec $-0,2 \leq ZS \leq -0,1$ de 0 à une valeur plateau dans le domaine de 0,7 à 0,9, et en ce que

c) la même grandeur d'entrée présente en outre, dans le domaine positif, une fonction d'appartenance P, qui est symétrique de la fonction d'appartenance N par rapport à la valeur 0 de $dM_{soll}/dt$, en ce que

d) la grandeur d'entrée $b_{kalt}$ présente une fonction d'appartenance N négative, qui a la valeur 1 dans le domaine de -1 jusqu'à une valeur prévisible de N1' avec $-0,6 \leq N1' \leq -0,4$ et décroît ensuite à la valeur 0 jusqu'à une valeur N0' de $b_{kalt}$ avec $-0,2 \leq N0' \leq -0,1$, en ce que

e) la même grandeur d'entrée présente en outre, dans le domaine autour de 0, une fonction d'appartenance trapézoïdale Z, qui est symétrique par rapport à la valeur 0 de $b_{kalt}$ et qui croit d'une valeur prévisible Z0' avec $-0,4 \leq Z0' \leq -0,2$ jusqu'à un début de plateau prévisible (N0') d'une valeur 0 à une valeur plateau dans le domaine de 0,8 à 0,9, et en ce que

f) la même grandeur d'entrée présente en outre, dans le domaine positif, une fonction d'appartenance P, qui est symétrique de la fonction d'appartenance N par rapport à la valeur 0 de $b_{kalt}$, en ce que

g) la grandeur d'entrée $M_{soll}$ présente une fonction d'appartenance L négative, qui décroît d'une valeur 1 à la valeur 0 dans le domaine de -1 à une valeur prévisible L0 avec $-0,5 \leq L0 \leq -0,4$, en ce que

h) la même grandeur d'entrée présente en outre une fonction d'appartenance H, qui croît d'une valeur 0 à une valeur finale 1, depuis une valeur prévisible H0 avec $-0,7 \leq H0 \leq -0,5$ jusqu'à une valeur finale 1, et en ce que

i) la grandeur de sortie $b_k$ présente, dans le domaine négatif, 3 fonctions d'appartenance triangulaires NB, NS, NVS, qui sont symétriques de fonctions d'appartenance positives PB, PS, PVS par rapport à une valeur 0 de $b_k$, en ce que

j) la fonction d'appartenance (PB) a sa valeur maximale 1 pour une valeur de $b_k$ (PB1) dans le domaine de 0,7 à 0,9, en ce que

k) la fonction d'appartenance (PS) a sa valeur maximale 1 pour une valeur de $b_k$ (PS1) dans le domaine de 0,3 à 0,5, et en ce que

l) la fonction d'appartenance (PVS) a sa valeur maximale 1 pour une valeur de $b_k$ (PVS1) dans le domaine de 0,1 à 0,3, toutes les valeurs étant rapportées à des grandeurs normalisées.

3. Dispositif de contrôle du patinage pour un véhicule

a) avec au moins un dispositif d'entraînement (7), qui présente au moins une roue motrice, de laquelle on peut prélever un signal de la valeur réelle de la vitesse de rotation ($n_{ist}$) ou un signal proportionnel au signal de la valeur réelle de la vitesse de rotation ($n_{ist}$),

b) avec un régulateur de l'accélération ou de la vitesse de rotation (6), qui est en liaison active à sa sortie avec le dispositif d'entraînement (7) et qui commande ce dernier en fonction d'une valeur de consigne régulée du couple moteur ($M_{soll}$),

c) avec un premier élément de sommation (5), qui est en liaison active à sa sortie avec le régulateur de l'accélération ou de la vitesse de rotation (6) et à l'entrée non négative duquel est appliqué un signal de la valeur de consigne de l'accélération du véhicule ($b_{soll}$) ou un signal de la valeur de consigne de la vitesse de rotation ($n_{soll}$),

d) dans lequel un signal de la valeur réelle de l' accélération du véhicule ($b_{ist}$) ou le signal de la valeur réelle de la vitesse de rotation ($n_{ist}$) est envoyé à une entrée négative du premier élément de sommation (5),

e) avec une logique de recherche (1) d'un maximum de transmission d'effort, qui est en liaison active à son entrée avec la sortie du régulateur de l'accélération ou de la vitesse de rotation (6) ou avec une sortie pour le signal de la valeur réelle du couple moteur ($M_{ist}$) du dispositif d'entraînement (7),

f) dans lequel il est prévu un second élément de sommation (3) avec une première entrée non négative, qui est en liaison active avec la sortie de la logique de recherche (1), et avec une seconde entrée non négative, qui est en liaison active avec une sortie du dispositif d'entraînement (7) pour le signal de la valeur réelle de la vitesse de rotation ($n_{ist}$),

g) dans lequel le second élément de sommation (3) est en liaison active à sa sortie avec une entrée non négative du premier élément de sommation (5),

caractérisé en ce que

h) la logique de recherche est un régulateur flou (1) qui, à sa sortie, fournit au second élément de sommation (3) une valeur actuelle de correction de l'accélération ($b_k$) en fonction d'une valeur de consigne du couple moteur ($M_{soll}$), de la dérivée temporelle de celle-ci et d'une valeur antérieure de correction de l'accélération ($b_{kalt}$), et en ce que

i) le dispositif d'entraînement (7) est en liaison active, par sa sortie pour un signal de la valeur réelle de la vitesse de rotation ($n_{ist}$), avec le second élément de sommation (3) via un élément de différentiation (9) et un filtre passe-bas (8) qui suit.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**